# EUROPEAN PATENT APPLICATION

(11) **EP 0 655 572 A1**
(43) Date of publication of application: **31.05.1995**
(21) Application number: 94830481.1
(22) Date of filing: 10.10.1994
(51) Int. Cl.: F16K 11/044

(54) **Automatic and manual diverter for bathtub tap assemblies**

(30) Priority: 29.10.1993 IT BS930116
(71) Applicant: GALATRON S.r.l., I-46043 Castiglione d/Stiviere (Mantova) (IT)
(72) Inventor: Orlandi, Alessio, I-46043 Castiglione D/Stiviere (Mantova) (IT)
(74) Representative: Manzoni, Alessandro

(57) **Abstract**

A flow diverter designed to be screwed into a housing (12') provided in the spout (12) of a bathtub tap assembly in order to control delivery of water through said spout or towards a shower connected thereto through a flexible pipe. It comprises a body (10) including two coaxial complementary elements (14, 15) superimposed and snapped together, enclosing a stopper (11) and constituting a cartridge-shaped assembly designed to be applied enbloc into the housing (12') provided in the said spout.

## Description

The present invention relates to taps and more particularly it relates to a flow diverter designed to be applied to bathtub tap assemblies in order to control selective delivery of water through a tap battery spout or through a shower connected thereto.

At present, flow diverters for bathtub tap assemblies are known which comprise a body including a stopper which is axially movable as a piston and which interacts alternatively with two seats located at different levels in order to permit delivery of water either to the tap assembly spout or to a shower connected to the diverter.

Traditional diverters comprise a body constituted by several elements, generally or prevalently made in metal, which are applied to the bathtub tap assembly severally, in succession, with laborious operations and which are thus assembled when mounting the diverter in place. Moreover, such diverters are always of considerable dimensions, owing to the type of assembly required among the elements of the diverter body, and also produce reduced flow rates in respect to their dimensions owing to the presence of improper throttlings inside said body.

The aim of the present invention is to obviate said disadvantageous characteristics of known diverters by providing a new, original diverter intended for application to a bathtub tap assembly enbloc and with only one operation, and which has a particularly simple and compact structure though ensuring considerable flow rates with the diverter in both positions.

In fact, it is an object of the present invention to provide a flow diverter for bathtub tap assemblies pre-assembled in cartridge form, which may be mounted in place as such, i.e. as a whole, and which does not require handling or assembly of any separate elements.

Another object of the invention is to provide a diverter having a cartridge-shaped structure whose largest part does not exceed 30 mm in diameter preferably less than 26 mm, and in which the passages for water delivery towards the spout and towards the shower have equal openings, and therefore equal flow rates.

A further object of the invention is to provide an automatic flow diverter which is also integrated with manual opening, thus permitting the diverter to be kept permanently open in shower position even when no water is running, i.e. when the tap assembly is closed.

Said objects and some others not mentioned herein are achieved by a diverter for bathtub tap assemblies substantially according to claim 1.

Further details of the invention will become apparent from the continuation of the description with reference to the accompanying drawings, in which:
Fig. 1 shows an exploded perspective view of the elements which constitute the diverter;
Fig. 2 shows a vertical sectional view of the diverter assembled;
Fig. 3 shows a sectional view of the diverter mounted to a bathtub tap assembly and positioned for delivery of water to a tap spout;
Fig. 4 shows the same sectional view as Fig. 3, though with the diverter positioned for delivery of water towards a shower;
Fig. 5 shows a sectional view of a detail of the diverter in its condition of permanent opening; and
Fig. 6 Shows a cross-sectional view according to arrows VI-VI in Fig. 5.

The diverter according to the present invention comprises essentially a body 10 and a piston stopper 11, and is mounted by screwing it into a housing 12' provided orthogonally inside the spout 12 of a bathtub tap assembly in order to control water delivery towards a shower through a pipe 13, usually flexible, connected to the diverter.

The diverter body 10 comprises two complementary coaxial elements 14,15, superimposed and snapped together. The stopper 11 comprises a stem 16 provided with a biconical closing gasket 17. The elements 14,15 and the stem 16 are advantageously made from synthetic material, such as technopolymer polyetherimide.

More particularly, an element of the body 10, namely the lower element 14, comprises, outside, a first threaded portion 14' to permit screwing of the diverter into the corresponding housing 12' of the spout 12 of the bathtub tap assembly, and a second threaded portion 14'' designed to permit connection of a flexible pipe 13 of a shower by means of a nut. A sealing gasket 18 is also provided on the outside of the element 14, above the first threaded portion 14'.

The diameter of second threaded portion 14'' is of usual dimensions, generally 1/2 inch, so as to receive the flexible pipe 13, whereas the diameter of first threaded portion 14' of the element 14 is between 18 and 30 mm, preferably 21 to 26 mm, to keep the dimensions of the diverter particularly compact.

Inside, said lower element 14 of the body 10 comprises a first axial stopper seat 14a located in its upper portion, a grill plane 14b located in its intermediate portion and an hexagonal or however polygonal hole 14c suitable for receiving a corresponding spanner when screwing the diverter in place and for the outflow of water towards the shower located in its lower portion, proximate to the second threaded portion 14''.

At the upper end of said element 14 angularly spaced tongues 14d are provided which delimit a first range of radial passages 14e and which are designed to be snappingly connected to the other element, namely the upper element 15, of the diverter body 10.

Such upper element 15 comprises a cage-shaped portion 15' provided with a peripheral sealing gasket 19, and a top neck 15''. Said cage-shaped portion 15' is provided with bottom teeth designed to be coupled to and engaged with said tongues 14d of the lower element 14. The same cage-shaped portion 15' delimits a second range of radial passages 15b located at a different level with respect to the first range of radial passages 14e defined by the tongues 14d of the lower element. Inside the cage-shaped portion 15', a second stopper seat 15c is provided on a level between both ranges of radial passages 14e, 15b.

A sealing gasket 15e is mounted at the base of the neck 15'' of the upper element 15, whereas a supplied tubular element 20, which may be chromium plated or coloured to match the bathtub tap assembly, covers the outside of said neck 15''.

The neck delimits an axial hole with an inside tapering defining a stop 15d.

The stem 16 of the stopper extends through and is displaceable in the hole of said neck 15, with a sealing gasket 21 interposed.

The lower portion 16' of said stem 16 is guided into a hole 14b' provided in the middle of the grill plane 14b in the element 14; a knob 22 is fixed at the top of the stem protruding from the neck 15''.

The biconical gasket 17 mounted on said stem is located and displaceable between the first and the second stopper seat 14a and 15c, in order to act on either of them, according as the water flow is to be directed to the spout of the bathtub assembly or to the shower.

The stem 16 is provided with an intermediate shoulder 16'' which interacts with the stop 15d thus limiting axial displacement towards the outside of the stem. Around the stem 16 a spring 23 is mounted which is located and works between the upper element 15 of the body 10 and the gasket 17 of the stopper, in order to normally keep said stopper resting on the first stopper seat 14a, in closing position.

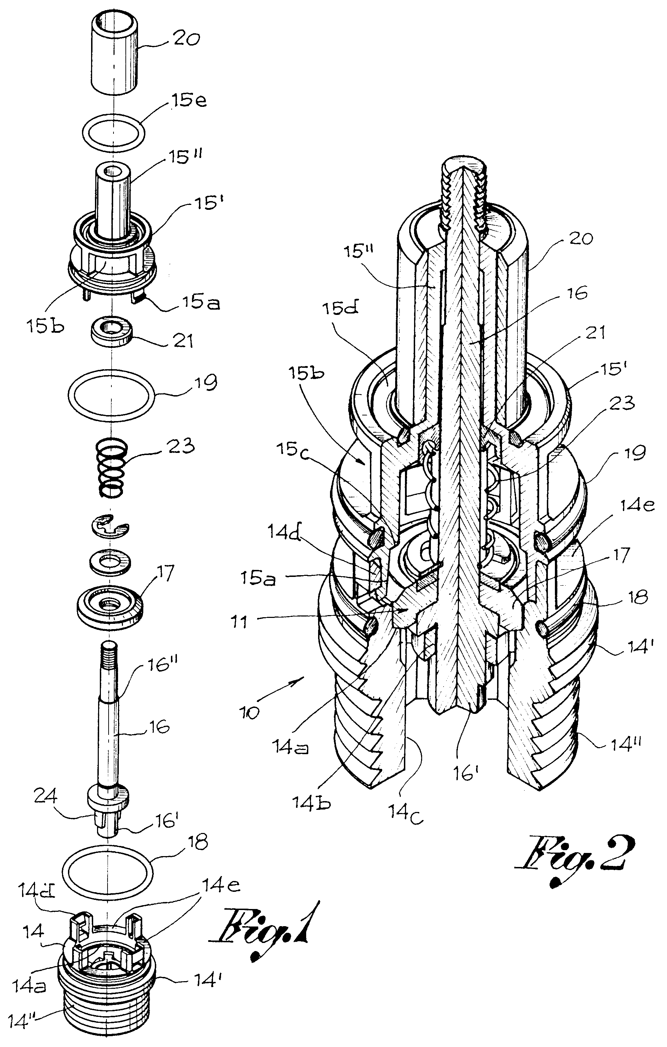

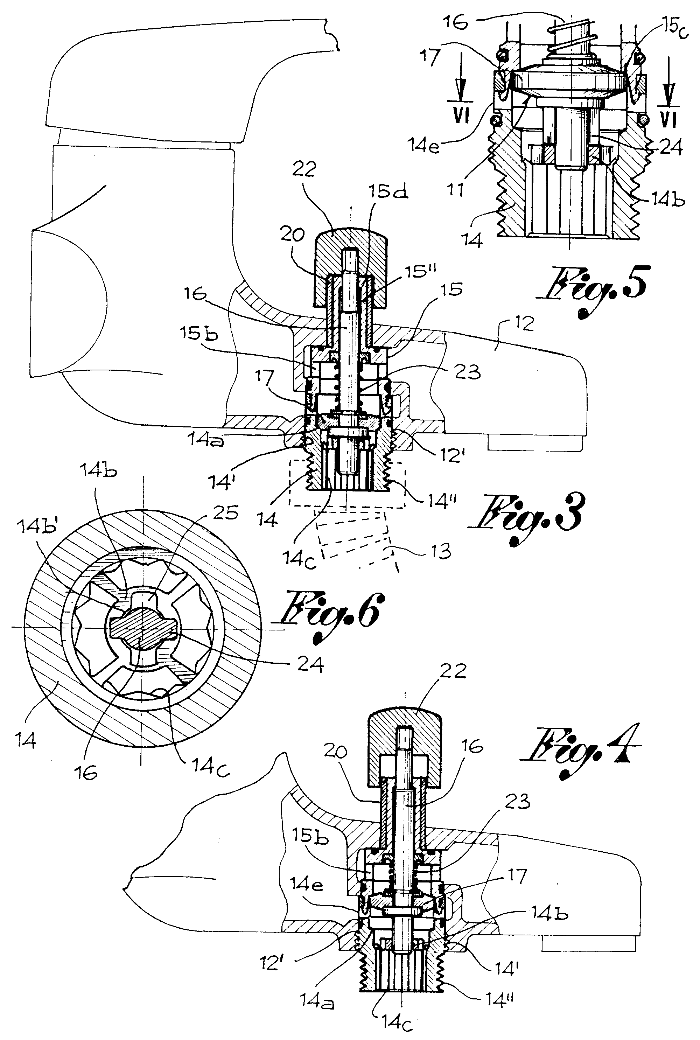

The above described diverter is preassembled as shown in Fig. 2 and integrally mounted like a cartridge to the spout of the bathtub tap assembly.

Mounting is performed by screwing the first threaded portion 14' into the corresponding threaded housing 12' of the spout 12 by means of a spanner to be introduced into the hexagonal or polygonal hole 14c so as to tighten the diverter in place. Mounting is therefore extremely practical and quick; afterwards, the knob 22 is to be fixed to the stem 16 and the flexible pipe 13 connected to the diverter, thus completing installation.

The spring 23 normally and automatically keeps the stopper 11 resting on the first stopper seat 14a, namely the lower seat, as shown in Figure 3 of the drawing. In such position, water flows through the first range of radial passages 14c and the second range of radial passages 15b as indicated by arrows F and is delivered through the spout 12, while the stopper prevents water from flowing to the shower through the pipe 13.

On the contrary, by moving back the stopper 11 against the action of the spring 23, it is pushed by water pressure and moves to closing position onto the second stopper seat 15c as shown in Fig. 4. Such position causes opening of the hole 14c towards the shower, and closing of water passage towards the second range of radial passages 15b, therefore water flows through the first range of passages 14e and is delivered towards the shower through the hole 14c as indicated by arrows G. Besides, when the bathtub tap assembly is closed and there is no water pressure, the stopper, stressed by the corresponding spring 23, automatically moves back to its initial position illustrated in Fig. 3, thus closing the water passage 14c towards the shower.

It is important to point out that the stopper may also be permanently kept in opening position - see Figure 4 - of water flow towards the shower. For this purpose, - see Figures 5 and 6 - at least one radial projection 24 is provided on the stem 16 below the biconical gasket 17, opposite to a radial slit 25 of the hole 14b', in the middle of the grill plane 14b; when the stopper is in upward position as illustrated in Figure 4 and contemporarily the stem 16 is rotated by a portion of turn, such projection moves onto a solid portion of the grill plane 14b, thus preventing any return to the initial position of Fig. 3 under the action of the spring 23.

In that case, water will only flow towards the shower pipe 13, until the stem 16 is rotated further and the projection 24 moved in proximity to the slit 25 so that the stopper, stressed by the spring 23, can move and close the first stopper seat 14a.

## Claims

1. A flow diverter designed to be screwed in place in a housing (12') provided in the spout (12) of a bathtub tap assembly in order to control delivery of water through said spout or towards a shower connected thereto by means of a flexible pipe, comprising a body (10) and a piston stopper (11) stressed by a spring (23) and displaceable in said body between a first stopper seat (14a) in order to stop water flow towards the shower while keeping water flow towards the spout, and a second stopper seat (15c) in order to stop water flow towards the spout while keeping water flow towards the shower, characterized in that said body (10) comprises two coaxial complementary elements (14,15), superimposed and snapped together, which enclose said stopper (11) and constitute a cartridge-shaped assembly which may be mounted enbloc into the housing (12') of such spout.

2. A flow diverter as claimed in claim 1, wherein a first element (14) of said body defines, outside, a first threaded portion (14') to permit screwing into the said housing (12') and a second threaded portion (14'') designed to permit connection of a flexible pipe (13) of a shower, and, inside, in axial order, a first range of radial passages (14e), the first stopper seat (14a), an intermediate grill plane (14b) and an axial hole (14c) for the outflow of water towards said flexible pipe, and wherein the second element (15) of said body defines a second range of radial passages (15b), the second stopper seat (15c) located intermediately between the said first and second range of radial passages (14a and 15b) and a slideway hole for the stopper (11), the first and the second element (14, 15) of such body being snapped together in proximity to said first range of radial passages.

3. A flow diverter as claimed in claim 2, wherein said first threaded portion (14') is 18 to 30 mm in diameter preferably 21 to 26 mm,

4. A flow diverter as claimed in claim 2, wherein said axial hole (14c) for the outflow of water towards said shower flexible pipe is hexagonal or however polygonal in order to receive a spanner for permitting screwing and tightening in place of the diverter.

5. A diverter as claimed in the previous claims, wherein the stopper (11) comprises a stem (16) provided a biconical gasket (17) acting alternatively on said first and second stopper seats, such stem (16) being also provided with at least one side projection (24) which interacts with said intermediate grill plane (14b), after displacement of the stopper towards the second stopper seat and rotation thereof, in order to keep said stopper in open position of water flow towards the shower.

6. A diverter as claimed in the previous claims, wherein said second element (15) of the body (10) is provided with a neck (15'') covered with a finishing tubular element which may be chromium plated or coloured.
